# EUROPEAN PATENT APPLICATION

(11) **EP 4 567 754 A1**
(43) Date of publication of application: **11.06.2025**
(21) Application number: 23215138.1
(22) Date of filing: 08.12.2023
(51) Int. Cl.: G06V 40/00, G06V 40/70

(54) **SYSTEM AND METHOD FOR BIOMETRIC IDENTIFICATION AND AUTHENTICATION**

(71) Applicant: Imec VZW, 3001 Leuven (BE); Katholieke Universiteit Leuven KU Leuven Research & Development, 3000 Leuven (BE)
(72) Inventor: DEGRAEVE, Robin, 9840 De Pinte (BE); GUO, Yuanyang, 3000 Leuven (BE)
(74) Representative: Winger

(57) **Abstract**

A biometric authentication and identification system (100) and related methods are disclosed. The system (100) comprises a quantization unit (102) for assigning a quantization index k to each datapoint of a biometric time series, a plurality of volatile threshold switches (108a), an address decoder (105) for selecting, at each time step t of the time series, a single threshold switch of through an index combination comprising at least the quantization index k[t] corresponding to the time step t and the quantization index k[t-T] corresponding to an earlier time step t-T, a pulse generator (115) for applying write pulses to the selected threshold switches, a readout unit (109) for accumulating measured leakage currents of each threshold switch in the high resistance state as components of a query vector, and a database (111) for matching the query vector with at last one biometry class vectors stored as token for a predefined user group. Each threshold switch transitions from a high resistance state to a low resistance state while subjected to a write pulse, and cycling history-dependent shifts in the threshold voltage being relaxed in the high resistance state.

## Description

### Field of the invention

The present invention relates to the field of time series processing and related processing systems, in particular authentication and identification systems based on biometric time series input.

### Background of the invention

Advances in machine learning, in particular deep convolutional neural networks, have fostered the identification of user-specific patterns in biometric data such as gait or voice. Unfortunately, most state-of-the art neural networks require extensive amounts of training data that is not always available and training of the model parameters over many epochs requires important computer resources. Therefore, large but accurate neural networks are typically trained and deployed on severs with especially equipped hardware. Moreover, end users wishing to have their own biometric data processed by the trained neural network need to submit their private data over potentially unsecure communication networks.

There is a need for energy-efficient and secure systems and methods that allow user identification and authentication also with little amounts of training data.

In Degraeve, R. et al. "Gait identification using stochastic OXRRAM-based time sequence machine learning", 2019 Symposium on VLSI Technology, Kyoto, Japan, 2019, pp. T84-T85, the authors propose one-shot learning in an array of OxRRAM-based compute elements, using gait signals as biometric data. However, data points of time sequences are mapped to only a fraction of a group of available compute elements, leaving the remaining elements unused. Moreover, each learning cycle requires the comparison of predicted data points with observed data point in the training signal, followed by the division of the compute elements into selected and de-selected elements and the application of set and soft reset pulses respectively.

### Summary of the invention

It is an object of embodiments of the present invention to provide energy-efficient and secure user identification and authentication.

The above objective is accomplished by methods and devices according to the present invention.

In one aspect, the present invention relates to a biometric authentication and identification system which comprises a quantization unit, a plurality of volatile threshold switches, an address decoder, a pulse generator, a readout unit and a database. The quantization unit is configured to assign a quantization index k to each datapoint of a user-specific biometric time series. Each threshold switch of the plurality of volatile threshold switches transitions from a high resistance state to a low resistance state when subjected to a voltage pulse exceeding a threshold voltage. Cycling history-dependent shifts in the threshold voltage of each threshold switch are relaxed in the high resistance state. The address decoder is configured to select, at each time step t of the user-specific biometric time series, a single threshold switch of the plurality of threshold switches through an index combination. The index combination comprises at least the quantization index k[t] corresponding to the time step 't' and the quantization index k[t-T] corresponding to an earlier time step 't-T', wherein T designates a predetermined time lag. The pulse generator is configured to applying voltage pulses exceeding the threshold voltage to threshold switches selected by the address decoder. The readout unit is configured to measure a threshold voltage-dependent leakage current of each threshold switch in the high resistance state and accumulating the leakage currents as components of a query vector. The database is configured to store biometry class vectors as authentication and identification tokens for a predefined user group and match the query vector with one of the biometry class vectors.

In some embodiments of the invention, the plurality of threshold switches may be arranged in a linear array. In other embodiments of the invention, the plurality of threshold switches may be arranged in crossbar array and located at respective crossing points of a plurality of row select lines and a plurality of column select lines of the crossbar array. In the crossbar array, no coupling of the threshold switches to a memristor device is required.

In some embodiments of the invention, the plurality of threshold switches may be two-terminal ovonic threshold switches.

In another aspect, the present invention relates to a biometric identification method which comprises the following steps:
(i) quantizing a user-specific biometric time series by assigning a quantization index k to each datapoint of the user-specific biometric time series,
(ii) selecting, at each time step t of the biometric time series, a single threshold switch of a plurality of threshold switches through an index combination comprising at least the quantization index k[t] corresponding to the time step t and the quantization index k[t-T] corresponding to the earlier time step t-T, wherein T designates a predetermined time lag,
(iii) applying voltage pulses exceeding a threshold voltage to selected threshold switches of the plurality of threshold switches, each threshold switch transitioning from a high resistance state to a low resistance state while subjected to said voltage pulse, and cycling history-dependent shifts in the threshold voltage of each threshold switch being relaxed in the high resistance state,
(iv) measuring a threshold voltage-dependent leakage current of each threshold switch in the high resistance state and accumulating the leakage currents into corresponding components of a query vector,
(v) providing a database storing biometry class vectors as identification tokens for a predefined user group,
(vi) matching the query vector with one of the biometry class vector stored on the database and identifying the user based on the matched biometry class vector.

In some embodiment of the invention, step (i) may further comprise quantizing the user-specific biometric time series with respect to a predetermined set of quantization boundaries, wherein the predetermined set of quantization boundaries is obtained by equal density binning with respect to a plurality of reconstructed phase-space trajectories. The reconstructed phase-space trajectories correspond to the mapping of input sequences of a dataset of interest into the delay embedding space defined by the different delay coordinates (time lags) in step (ii).

In some embodiments of the invention, step (ii) may further comprise selecting, at each time step t of the biometric time series, a single threshold switch of a plurality of threshold switches through an index combination, wherein the index combination comprises the quantization index k[t] corresponding to the time step 't' and multiple quantization indices k[t-T1], ..., k[t-Tm], corresponding to the earlier time step 't-T1', ..., 't-Tm', wherein T1 < ...< Tm designate predetermined time lags.

In some embodiment of the invention, step (iv) may further comprise measuring the threshold voltage-dependent leakage current of each threshold switch in a subthreshold region of the threshold switch. A voltage amplitude of readout pulses may be set to bias the threshold switch in the subthreshold region.

Embodiments of the invention using simple linear or crossbar arrays of threshold switch-based compute nodes have the advantage that no random networks of compute nodes have to be designed in implemented in hardware, where true random connections are difficult to obtain.

It is an advantage of embodiments of the invention that biometric authentication and identification systems containing a relatively small number of threshold switches, e.g. less than one hundred, e.g. less than fifty, e.g. between ten and fifty, performs authentication and identification tasks in a secure manner.

It is an advantage of embodiments of the invention that biometric data can be collected locally and that only biometric data stemming from the user to be authenticated needs to be processed. Authentication and identification systems in accordance with embodiments of the invention can be implemented on edge devices, allowing for the biometric data processing in the edge.

It is an advantage of embodiments of the invention that biometric class vectors can be obtained during a user registration phase and stored for later use. As opposed to neural networks, no internal parameters of the system need to be trained during the registration phase, thereby enabling one-shot learning followed by an efficient execution of biometric authentication or identification processes. Single-shot type of learning and reduced or no transfer of biometric data over communication networks allow embodiments of the invention to operate at low levels of power consumption.

It is an advantage of embodiments of the invention that biometric authentication or identification methods can be executed efficiently in the edge, without communication to external servers or cloud service providers. This renders biometric authentication applications less vulnerable to identity theft, data leaks, network security breaches and network connectivity problems.

It is an advantage of embodiments of the invention that multiple biometry time series, such as gait and voice, can be combined for authentication to further increase security.

It is a further advantage of embodiments of the invention that biometry class vectors are stored instead of directly storing user-specific, sensitive biometry data. Moreover, no traces of the biometric time series are persistently retained in the plurality of threshold switches, which are volatile devices. The threshold switches are operated in a transient regime and relaxation of their threshold switches ensures that there is no long-term biometric data remanence in the threshold switches.

Particular and preferred aspects of the invention are set out in the accompanying independent and dependent claims. Features from the dependent claims may be combined with features of the independent claims and with features of other dependent claims as appropriate and not merely as explicitly set out in the claims.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

### Brief description of the drawings

The invention will now be described further, by way of example, with reference to the accompanying drawings, in which:
FIG. 1 illustrates a temporal data processing system according to a first embodiment of the invention, which can be used for biometric identification and authentication of users.
FIG. 2 is a cross-sectional view of an ovonic threshold switch that can be used in embodiments of the invention.
FIG. 3 shows electrical properties of the ovonic threshold switch of FIG. 2.
FIG. 4 illustrates the steps of a user identification method in accordance with embodiments of the invention.
FIG. 5 illustrates the steps of a user registration method, which can be used in embodiments of the invention.
FIG. 6 illustrates the steps of a user authentication method in accordance with embodiments of the invention.
FIG. 7 is a portion of a gait signal acquired for a user, which can be used as biometric data in embodiments of the invention.
FIG. 8 explains the delay embedding, phase space reconstruction and quantization boxes obtained with respect to the gait signal of FIG. 7.
FIG. 9 shows a three-dimensional delay embedding and attractor reconstruction with respect to the gait signal of FIG. 7.
FIG. 10 illustrates a temporal data processing system according to a second embodiment of the invention, which can be used for biometric identification and authentication of users.

The drawings are only schematic and are non-limiting. In the drawings, the size of some of the elements may be exaggerated and not drawn on scale for illustrative purposes. The dimensions and the relative dimensions do not necessarily correspond to actual reductions to practice of the invention.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, directional terminology such as top, bottom, front, back, leading, trailing, under, over and the like in the description and the claims is used for descriptive purposes with reference to the orientation of the drawings being described, and not necessarily for describing relative positions. Because components of embodiments of the present invention can be positioned in a number of different orientations, the directional terminology is used for purposes of illustration only, and is in no way intended to be limiting, unless otherwise indicated. It is, hence, to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art.

In the description provided herein, numerous specific details are set forth. However, it is understood that embodiments of the invention may be practiced without these specific details. In other instances, well-known methods, structures and techniques have not been shown in detail in order not to obscure an understanding of this description.

In a first aspect, the present invention relates to a system for biometric user identification and authentication. Here temporal data generally relates to any kind of continuous-time or discrete-time signals, time series or time sequences that carry user-specific biometric information, as well as biometry-related data streams. Biometric data is personal data that allows the identification and authentication of a specific user among a group of potential users. Biometry helps defining, measuring and extracting features of a person's physiology or behavior that are unique to this person, thus acting like a personal security key. Examples of user-specific biometric data include, but are not limited to gait, voice signals, heartbeat, electroencephalographic time traces, electrocardiographic time traces, or combinations thereof. Moreover, static image data such as iris scans, facial scans or fingerprint scans can be serialized into a biometric data stream. Hereinunder, the terms biometric data sequence, user-specific data sequence, biometric time series and user-specific time series are used interchangeably.

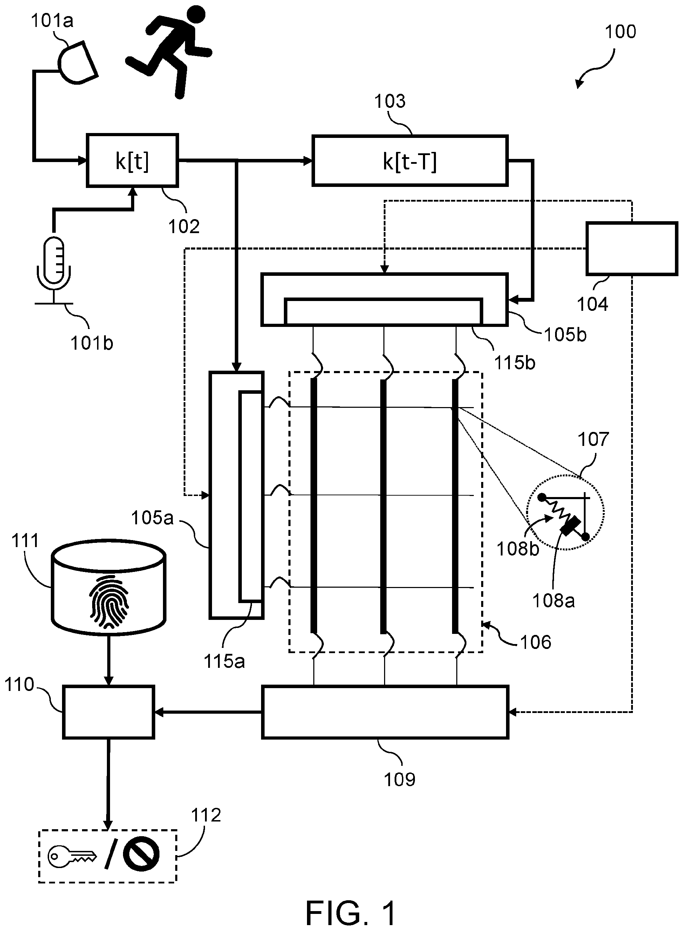

FIG. 1 shows a temporal data processing system 100 for biometric user identification and authentication according to a first embodiment. The temporal data processing system 100 comprises one or multiple biometric sensors 101a-b, a quantization unit 102, a delay element 103, an address decoder 105a-b, a crossbar array 106 of volatile threshold switches 108a, a readout unit 109, a database 111, and a pulse generator 115a-b.

The biometric sensors 101a, 101b are configured for scanning or recording a personal feature of a user and generating a biometric data sequence representative of the personal feature. In the present embodiment, the system 100 is configured to accept at least one of a gait signal or a voice signal as biometric data sequences for processing and authentication. Sensor 101a may be an inertial motion unit that represents the user's gait by means of angular acceleration over time, or a camera with motion detection and image feature recognition and extraction capabilities, which allows the detection and tracking of landmarks on the user silhouette. Sensor 101b may be a microphone. Alternatively, the biometric data sequences may be acquired remotely and the pre-acquired biometric data sequences are transmitted to an input adapter of the system 100, e.g. via communication network. Hence, a biometric sensor is not required in each embodiment of the invention.

The quantization unit 102 which is configured to receive the biometric data sequences as inputs and assign a quantization index 'k' to each data point/data sample of the user-specific biometric data sequence. That is, the quantization unit is adapted to compare the amplitude of each data point of the biometric data sequence to the boundary values of a plurality of indexed quantization intervals (also referred to as labelled bins or boxes) and determine the index of the quantization interval that contains the data point. Hence, the quantization unit 102 translates the biometric data sequence into a corresponding sequence of quantization indices. A linear index or labelling of the quantization bins is preferred, e.g. an index running from k = 0 to k = N-1, wherein N is the total number of quantization bins. The quantization unit may be configured for uniform quantization, resulting in equally sized quantization intervals, or non-uniform quantization, which leads to quantization intervals of different sizes. In the present embodiment, the data point sampled at time 't' is associated with the index k[t]. Known quantization hardware, e.g. quantizers implemented with ADCs, may be used as quantization unit, where necessary modified to output the quantization index in addition to or instead of the quantized version of the input signal. In the case of a continuous-time input signal, the system may comprise a sampling unit as an additional unit that is connected in series with quantization unit 102, such that only time-discrete input signals (e.g. a sequence of biometric data samples) are received at an input of the quantization unit. Alternatively, the sampling unit may be a part of the quantization unit.

In particular embodiments of the invention, the quantization unit may be configured to perform equal density binning. That is, the quantization unit is configured to receive or adapt the boundaries of the quantization intervals (e.g., the discrete bins) such that each quantization interval contains an equal amount of data points on average, i.e. when averaging over many data samples from a large representative input database. This has the advantage that an uneven use of the plurality of volatile threshold switches can be reduced, e.g. situation in which some of the threshold switches are heavily used and others rarely used can be avoided.

The crossbar array 106 of volatile threshold switches 108a provides the temporal processing power of the system 100. A plurality of volatile threshold switches 108a and their associated series resistances 108b are arranged at each crossing point 107 of the array 106, where one of a plurality of column lines intersects with one of a plurality of row lines of the crossbar array 106. In embodiments in which the plurality of volatile threshold switches are arranged in a two-dimensional array, e.g. crossbar array, a number of rows and a number of columns should each be equal to, or larger than the number 'N' of quantization bins. In other embodiments of the invention, the plurality of volatile threshold switches are organized into a linear array comprising at least N² elements, or are arranged in a plurality of individually addressable 2D arrays, e.g. at least two crossbar arrays. In embodiments of the invention, the crossbar array typically comprises 100x100 threshold switches or more, e.g. 1000x1000 threshold switches or more, although satisfactory results have been obtained with as little as N = 3 quantization bins and 3x3 crossbar array of threshold switches. Details of the volatile threshold switches are described further below.

The address decoder 105a, 105b comprises a row decoder 105a and a column decoder 105b as subcomponents, hence is adapted for addressing the array elements at the cross-point 107 of the two-dimensional crossbar array 106. Nonetheless, an address decoder in accordance with other embodiments of the invention may only comprise a single decoder unit, for instance, in the case of a linear array of elements being addressed instead of a two-dimensional array. The address decoder 105a, 105b is configured to select, at each time step 't' of the user-specific biometric data sequence, a single threshold switch of the plurality of threshold switches through an index combination, wherein the index combination comprises at least the quantization index k[t] corresponding to the time step t and the quantization index k[t-T] corresponding to an earlier time step t-T. Here, the variable 'T' designates a predetermined time lag, which may take different values for different types of biometric data sequences and/or different types of applications. In the present embodiment, a single threshold switch 108a of the array 106 may be selected through a combination of the quantization index k[t] as row address and the delayed quantization index k[t-T] as the column address.

In the present embodiment, the column decoder 105b is connected to quantization unit 102 via the delay element 103, in order to receive a delayed version of the index sequence corresponding to the biometric data sequence. The delay element 103 is configured to delay the index sequence from the quantization unit 102 by a predetermined number of time steps, e.g. 'T' time steps, which may be reconfigurable or programmable. A buffered or unbuffered delay line, cyclic or non-cyclic data buffer (e.g. FIFO buffer), or other delay circuits may be used to implement the delay element 103 in embodiments of the invention. In contrast thereto, the row decoder 105a is connected to quantization unit 102 to receive the index sequence without any additional delay. In alternative embodiments of the invention, the row decoder is connected to the quantization unit instead of the column decoder, such that the quantization index k[t] serves as the column address and the delayed quantization index k[t-T] as the row address. In yet other embodiments, both the row decoder and the column decoder are connected to the quantization unit via different delay elements, which are configured to delay the index sequence by a different number of time steps.

Furthermore, the system 100 comprises pulse generator that is configured to apply write pulses to the threshold switches selected by the address decoder 105a, 105b. In the present embodiment, the pulse generator is provided by row driver circuitry 115a and column driver circuitry 115b, which may be parts of the row decoder and column decoder respectively. In alternative embodiments of the invention, one or more pulse generator may be provided as a separate units. Additionally, the pulse generator 115a-b, or a separate pulse generator, may be configured to apply readout pulses to the different volatile threshold switches of the crossbar array. The readout pulses typically have smaller amplitude than the write pulses. A duration of the readout pulses may be a controlled parameter of pulse generators for readout pulses in embodiments of the invention, wherein longer durations of readout pulses improve the readout accuracy. In order to apply write pulses and readout pulses to the threshold switches, the crossbar array 106 may be alternately operated in a write mode and a readout mode. A control unit 104 may be configured for sending control signals to the address decoder 105a-b, pulse generator 115a-b and the readout unit 109, which toggles their operating mode between the write mode and the readout mode. Conventional decoder hardware and row/column driver circuitry may be used in embodiments of the invention.

The readout unit 109 is connected to the column lines and/or row lines of the crossbar array 106 and is configured to detect the threshold voltage-dependent leakage current of each threshold switch in the high resistance state. Moreover, the readout unit 109 is configured to accumulate the detected leakage currents into a large query vector. Given the possible large number of threshold switches present in the crossbar array, e.g. between 10⁴ to 10⁶, or more than 10⁶, the corresponding number of components/entries in the query vector can also be very large. Each time the crossbar array 106 is operated in the readout mode, the readout unit 109 detects the leakage currents of a subset of the threshold switches (e.g. one row of threshold switches) or all the threshold switches per readout cycle. In the former case, it takes several readout cycles before a single readout of the leakage currents of all the threshold switches of the array is completed, whereas in the latter case a single readout cycle is sufficient. The cumulative leakage current for each threshold switch can be updated after each complete readout of the leakage currents of all the threshold switches of the array, or may be computed after the last readout of the leakage currents of all the threshold switches of the array has finished. A readout unit in accordance with embodiments of the invention may include one or multiple sense amplifiers and analog-to-digital (ADC) convertors, as well as a memory unit for intermediate storage of the collection of cumulative leakage currents and digital logic for calculating updates of the cumulative leakage currents. The final result of the cumulative leakage currents is then stored in the query vector, which is representative of the biometric data sequence after temporal processing by the elements of the crossbar array. The query vector can be considered as a "digital fingerprint" of the user to be authenticated or identified.

A query processor 110 is connected to the readout unit 109 and configured to receive the query vector as input. Additionally, the query processor 110 is connected to a database 111, which stores biometry class vectors as authentication tokens for a predefined user group, e.g. a single or multiple pre-registered users whose identity has been verified beforehand and to whom access permission has been granted. Every new attempt to access a protected resource through the system 100 then requires authentication of the preregistered user. At least one biometry class vector (e.g., as a digital fingerprint) per registered user is stored on the database and comprises user information such as user credentials and/or user password as metadata. The database 111 is further configured to match the query vector with one of the biometry class vectors, e.g. by comparing the received query vector with each of the stored biometry class vectors (e.g., optionally taking into account the biometric data source and/or biometric data acquisition circumstances) and retrieving the stored biometry class vector that is most similar to the received query vector as a match. The database may be programmed to determine a similarity measure between a stored biometry class vector and the received query vector, e.g. cosine similarity or Hamming distance. A matching score, e.g. confidence score or the similarity measure itself, can be assigned to the retrieved biometry class vector. The database 111 is further configured to transmit the user information of the retrieved biometry class vector, as well as the matching score, to the query processor 110. The query processor 110 is programmed to issue an access permission or access denial message 112 to the use, based on the received matching score and, optionally, the received user information from the database 111. This may include the step of comparing the received matching score to a threshold for authentication and to issue an access denial message 112 to the user, or a demand to retry entering the biometric data sequence acquisition, if the matching score is lower than the threshold for authentication. Else, if the received matching score is greater or equal to the threshold for authentication, the query processor 100 may be programmed to issue an access permission message 112 to the user. Optionally, the query processor 110 may be programmed to also ascertain the correspondence of the received user information from the database with the information entered by the user, e.g. ascertaining identical user credentials and/or password, prior to issuing the access permission message 112. If none of the stored biometry class vector can be matched by the database 111, the query processor issues an access denial message. In embodiments of the invention, the database 111 and the query processor 110 may be provided as a single unit.

In embodiments of the invention, the at least one biometry class vector is a copy of the query vector obtained during a registration process of the user (e.g., operating the system 100 in registration mode instead of authentication mode). The user identity can be validated by an authority or confirmed by means of already existing private keys (e.g. keycard, fingerprint data, etc.) during the registration process. More than one biometry class vector can be stored with respect to a registered user, e.g. depending on the source of biometric data (gait, voice, etc.) and/or the circumstances prevailing during the acquisition of the biometric data sequence , e.g. background noise or flue with respect to voice data.

The temporal data processing system according to the first embodiment accepts scalar-valued temporal data or data-carrying. Vector-valued signals can be serialized in embodiments of the invention, by concatenation of the vector signal components, i.e. appending the time signal of each component in order to obtain a longer scalar time signal, or may be processed component-wise in parallel. In the latter case, the system components of the scalar implementation just described can be replicated to provide full support for vector input signals.

In preferred embodiments, the system 100 is implemented on a single electronic consumer article, e.g. an edge device that is connectable to a communication network, cloud service provider or the internet, e.g. in the context of the internet of things (IoT), e.g. an embedded device or smart phone. Providing a single device that combines biometric sensor, temporal processing means and database functionality reduces the risk of security breaches and identity theft. Indeed, the biometric data sequence, or any information derived therefrom, does not leave the device during the user identification or authentication process. In particular, it is not required to transmit biometric data, which is private and sensitive, from the client device over vulnerable networks to a distant server, where the transmitted data is prone to be intercepted by malicious third parties and used for ID forgery. Another advantage of not having to exchange biometric data over a communication network is the increased speed of the user identification/authentication process and energy saving; secure encryption and transmission protocols and cloud access are adding delays and consume power. Furthermore, blocked device or resource access in the event of network connection problems or timeout can be avoided in embodiments in which the system is implemented on a single electronic consumer article. Nonetheless, embodiments of the invention are not limited to systems that are implemented on a single electronic consumer article. It is possible to store a pre-acquired biometric data sequence on a security token, e.g. keycard, or to use a biometric sensor that is remotely connected to the remainder of the system, e.g. a client or edge device, e.g. a mobile phone. Additionally or alternatively, the database and query processor may be implemented on a server that is remotely connected to the remainder of the system, e.g. a client or edge device, e.g. a mobile phone, and which uses secure transmission over a communication network for the exchange of biometry related data, e.g. encrypted query vectors, access permission or denial messages, etc.

The foregoing user authentication system can also be used for user identification, e.g. by switching to the system from authentication mode to identification mode. In identification mode, the system determines the identity of the user based on the biometric data sequence he or she entered. In contrast to the authentication mode, the query processor 110 skips the step of comparing the matching score to the threshold for authentication and simply outputs the received user information from the database 111, i.e. the user information associated with the matched and retrieved biometry class vector. If no match is found in the database 111, or the matching score is below an identification threshold, the query processor 110 may output an unknown user.

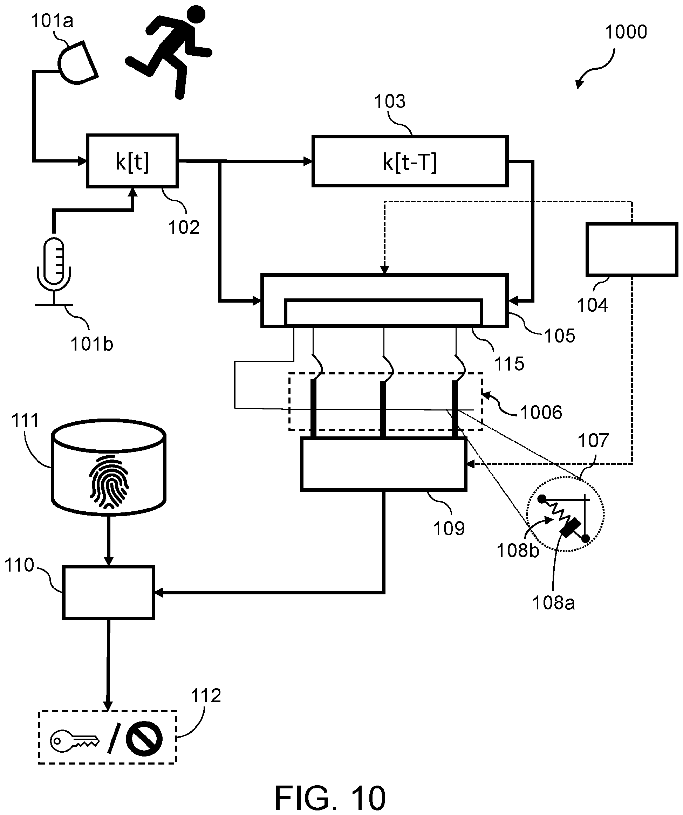

Referring now to FIG. 10, a temporal data processing system 1000 for biometric user identification and authentication according to a second embodiment of the invention is shown. The temporal data processing system 1000 differs from the system of the first embodiment in that a single address decoder 105 and pulse generator 115 is provided for selecting and applying write and readout pulses to the volatile threshold switches, respectively. Moreover, the plurality of threshold switches are arranged in a linear array 1006 instead of a 2D array and are connected by a common row line. During readout and write phases, a reference voltage (e.g. ground) can be applied to the row line, whereas only the selected threshold switch receives the readout or write pulse via the corresponding column line. In this embodiment, the address decoder 105 is determining the column address for threshold switch selection and pulse delivery based on the combined quantization indices k[t] and k[t-T]. For instance, the column address may be calculated as col = k[t] + N*k[t-T], wherein 'col' designates the addressed column and 'N' stands for the number of quantization bins.

In some embodiments of the invention, the quantization unit may be connected to multiple different delay elements to generate multiple index sequences with different time lags, e.g. k[t], k[t-T1], k[t-T2], ..., k[t-Tm], and the address decoder is configured to select a single threshold switch for each one of m independent arrays of threshold switches, based on the multiple index sequences with different time lags. The readout unit is configured to accumulate the leakage currents for each independent array of threshold switches, resulting in m distinct intermediate query vectors, and combine the intermediate query vectors into one final query vector, e.g. by concatenating the m intermediate query vectors into one larger final query vector or calculating the final query vector as the mean (vector) of all the intermediate query vectors. This has the advantage that delay embeddings for more than one delay coordinate can be generated and mapped to the array of threshold switches (and phase space reconstruction can be achieved in more than two dimensions), and/or the biometric data sequences of different components of a biometric vector input signal can be combined. Delay embeddings and attractor reconstruction are described further below. Moreover, the address decoder, or a separate index remapping unit of the temporal data processing system, may be configured to remap the indices of the quantization index sequence prior to selection of the threshold switch. This may help optimizing the use of very large arrays of threshold switches by restricting the amount of addressable threshold switches to smaller areas of the entire array of threshold switches. Concurrent authentication requests from different users, for example, may be time-multiplexed and split over different areas of the larger array of threshold switches.

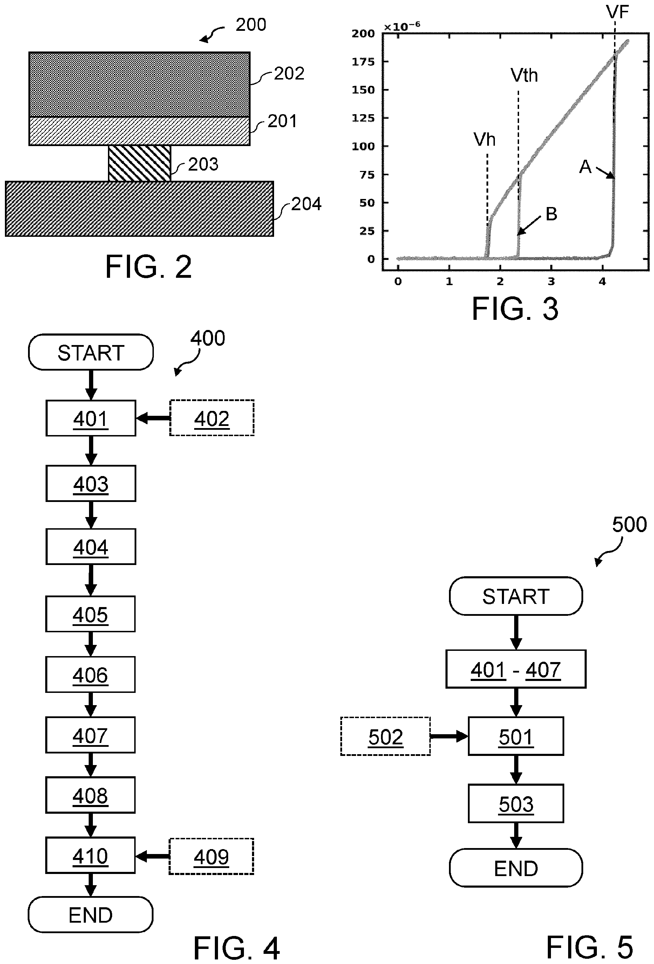

FIG. 2 is a schematic cross-sectional view of an ovonic threshold switch that can be used as volatile threshold switch in embodiments of the invention. The ovonic threshold switch 200 is formed as a mushroom-type two-terminal device and comprises a switching layer 201 that is sandwiched between a top electrode 202 and a bottom electrode 203. Compared to three-terminal devices, two-terminal devices have the advantage of being easier to fabricate and contact, in particular in crosspoint arrays. The top electrode, switching layer and the bottom electrode are formed as a vertical material layer stack over a substrate 204. The switching layer comprises a glassy chalcogenide material, e.g. an amorphous binary, ternary or quaternary compound containing at least one element of the chalcogen, e.g. Te, As, Se or S. An exemplary chalcogenide material for the switching layer is GeAsTe or SiGeAsTe. Nonetheless, the use of non-hazardous chalcogens like Te or S may be preferred. The thickness of the switching layer may be only tens of nanometers, e.g. between 10 nm and 20 nm. The contact width between bottom electrode 203 and substrate 204 (i.e. along horizontal axis in FIG. 2) may be as small as the critical dimension for the corresponding fabrication process, e.g. about 65 nm, which allows the fabrication of dense arrays of ovonic threshold switches, e.g. in a crossbar array. An insulating film may be formed over the substrate to protect the ovonic threshold switch from damage. Pillar-like device structures, or other geometries, may be used for the two-terminal ovonic threshold switches instead of the mushroom-type devices.

FIG. 3 shows the electrical current-voltage behavior for the ovonic threshold switch (OTS) of FIG. 2 under different biasing. The abscissa indicates the bias strength in volts (bias applied between the top and bottom electrode) and the ordinate the measured current through the two-terminal device in amperes. Measured traces A and B illustrate the first firing (formation) and subsequent switching behavior of the OTS. Both traces reveal a sharp increase in the conducted current that flows through the switching layer as soon as the applied bias voltage exceeds a critical value, i.e. the firing voltage 'VF' for trace A and the immediate threshold voltage Vth for trace B respectively. A higher firing voltage 'VF' compared to the subsequent switching threshold Vth initiates conductive cluster paths in the switching layer of the OTS. These clusters in the switching layers are complex spatial structures that differ from OTS device to OTS device. The increased current flow through the switching layer is accompanied by a drop of the resistance of the OTS; the OTS is switched from a high resistance state to a low resistance state. In the context of the present invention, a voltage pulse that induces the switching from the high resistance state to the low resistance state is also referred to as a write pulse or switching pulse. The current magnitudes decreases abruptly again if the applied bias voltage is then lowered below a holding voltage 'Vh'. Hence, the OTS is switched back from the low resistance state to the high resistance state. In the latter, the OTS only conducts a very small amount of leakage current in the sub-threshold region, e.g. less than 1 nA, e.g. less than 0.1 nA for applied bias voltages in the range from 1.0 V to 2.0 V, e.g. between 1.5 V and 2.0 V. The OTS is a volatile switch as information stored in the resistive state of the OTS is inevitably lost in the absence of the holding voltage. Threshold voltage, threshold current and leakage current values can be designed by appropriate modifications of the switching layer thickness, composition and stoichiometry. A number of quenched defects (quenched delocalized electron states when switching off the device after first firing, due to a sudden drop in temperature and resulting longer relaxation time constants) in the switching layer or switching layer interfaces determines the amplitude of the threshold current and the immediate threshold voltage of the OTS.

It is understood from the electrical properties of FIG. 3 that the OTS displays resistive switching from a high resistance state to a low resistance state when a write pulse is applied and from a low resistance state back to a high resistance state if the applied voltage signal is removed or drops below the holding voltage at the end of the write pulse. This completes one switching cycle. In between successive switching cycles, at least some of the quenched defects are allowed to relax, e.g. from a delocalized state back to a localized state, thereby causing the relaxation of the threshold voltage, which means that the value of the threshold voltage is drifting as a function of the relaxation time. Here, relaxation time refers to the time period during which the OTS is not subjected to any above threshold voltage stress, e.g. the time interval between successive switching cycles as determined by respective switching pulses. At the end of each relaxation time interval, the threshold voltage of the OTS will have moved to a new immediate threshold voltage level, somewhere between a minimum threshold voltage level and a maximum threshold voltage level. The latter corresponds to the pristine threshold voltage that has to be overcome during first firing step while the former corresponds to threshold voltage level reached immediately after the first firing step. In other words, the threshold voltage of the OTS will have relaxed -fully or partially - at the end of each relaxation time interval, just before it is being reset to its minimum value by the next write pulse. For the OTS, an increase of the threshold voltage is observed with increasingly long intervals of relaxation time. Interestingly, threshold voltage relaxation is observable over a wide spectrum of relaxation time intervals, e.g., reaching from short time intervals of a few microseconds to longer time intervals in the millisecond and second range and up to very long time intervals ranging from hours to days and even months. In other words, the timescales of the threshold voltage relaxation dynamics span many decades. This has the advantage that OTS, or other suitable volatile threshold switches with comparable threshold voltage relaxation dynamics, can process input data sequences that have very different timescales.

The phenomena of threshold voltage relaxation and cycling history dependence in threshold switches like OTS are generally perceived as reliability issues, as they would impair the optimal functioning of the threshold switch. Their reduction or elimination is constantly sought after, e.g., in non-volatile memory cells where volatile OTS act as selectors for non-volatile storage elements. The inventors found that, contrary to the common prejudice, these phenomena can be advantageously put to use in signal processing devices that operate on time sequences, e.g. sequential input data or time series. Remarkably, in such temporal data processing devices and related systems, the threshold voltage relaxation confers short-term memory upon the threshold switches, whereas the cycling history dependence of the threshold voltage shift endows the threshold switches with the capability to separate different input data sequences. Moreover, the leakage current in the sub-threshold region of the OTS is a nonlinear function (e.g. exponential function) of the difference between the immediate threshold voltage and the applied bias voltage (i.e. readout voltage) during a readout phase. This advantageously amplifies differences that exist between separable input data sequences. A readout voltage pulse can be sufficiently short for a targeted accuracy of the readout currents, e.g. about 1 µs or less, and has lower amplitude than a write pulse. Hence, minimal stress is exerted on the OTS and the threshold voltage relaxation dynamics are only minimally disturbed, or not affected at all, by the application of the readout pulses. Therefore, the readout frequency is independent of the write pulse frequency. The preceding properties - short-term memory, input separability and nonlinearity in the outputs - are frequently referred to as the fundamental compute properties in the context of transient signal computing and echo state networks. In this sense, each OTS can be considered a compute node for temporal signal processing, wherein the internal dynamics of the threshold voltage are a state variable of the compute node that influences the nonlinear input-output behavior (transfer function) of the node. As explained above, input data sequences with very different timescales can be processed.

Volatile threshold switches in accordance with embodiments of the invention may be implemented in many different ways and are not limited to OTS. Conventional n-type or p-type metal oxide semiconductor field-effect transistors (MOSFETs), for example CMOS-type MOSFETs, are alternative volatile threshold switches that can be used in embodiments of the invention. There, the bias temperature instability (BTI) effect plays a role similar to the quenched defect states in OTS. Causing a shift in the threshold voltage of the MOSFET, the BTI effect in transistors is generally considered to be a reliability issue that degrades the transistor performance. As in the previous case of OTS, a cycling-dependent drift of the threshold voltage has been observed in MOSFETs with respect to the BTI effect. Likewise, the cycling-dependent drift of the threshold voltage that is due to the BTI effect in MOSFETs exists for a broad range of relaxation time intervals, e.g. extending from nano- or microseconds up to several days and months. In contrast to the two-terminal OTS, a MOSFET is typically provided as a three-terminal device, in which the write pulses and readout pulses are supplied to the gate terminal during the write phases and the readout phases respectively. Drain and source terminals of the MOSFET may remain connected to ground during the write phases, whereas a small voltage differential is applied between drain and source terminal during the readout phases. A nonlinear sub-threshold current flowing through the transistor channel can be detected as output signal, which is comparable to the detection of the leakage current as output signal in the case of OTS. In the context of the present invention, a MOSFET is considered as a volatile threshold switch that has degenerate threshold and holding voltages.

In yet embodiments of the invention, the volatile threshold switches may be implemented as modified charge trap memory cells whose retention time has been lowered intentionally, in order to accelerate the rate of threshold voltage relaxation after application of a write pulse.

In a further aspect of the present invention, a user identification method is disclosed which uses a temporal data processing system according to embodiments of the previous aspect.

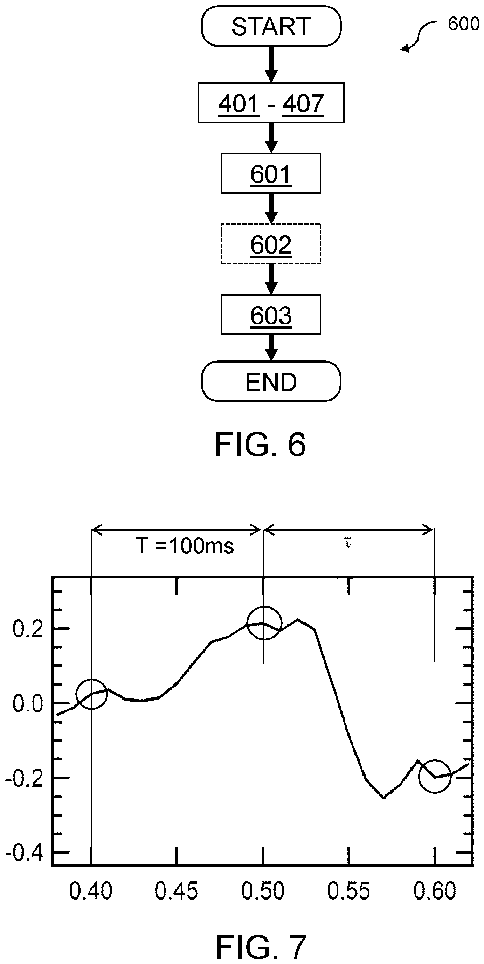

FIG. 4 illustrates the steps of a user identification method 400 in accordance with embodiments of the invention. In a first step 401, a user to be identified provides his/her biometric data sequence. This may include the optional step 402 of acquiring the biometric data sequence by means of at least one biometric sensor, or transmitting a pre-acquired biometric data sequence from a storage medium (local or remote) to an input adapter, e.g. network adapter, of the temporal data processing system. Continuous-time signals may be sampled beforehand to obtain discrete-time signals, i.e. data sequences. As an example, FIG. 7 shows the time-dependent angular acceleration data acquired in respect of a person's gait, which designates a rhythmic manner of movement, e.g. walking or running. that is characteristic of the person's identify. Gait is one of severable existing dynamic characteristics that can be used to recognize or identify a person, which is why gait signals or signals related to gait can be used as biometric input signals in embodiments of the invention.

Next, the biometric data sequence is translated into a corresponding quantization index sequence in step 403, e.g. by comparing the amplitude of each data point of the biometric data sequence to the boundary values of a plurality of indexed quantization intervals and determining the index of the quantization interval that contains the data point. As a result, a quantization index 'k' is assigned to each data point/data sample of the user-specific biometric data sequence. The quantization step may be simplified if the biometric data sequence is already provided as quantized data, in which case step 403 reduces to the determination of the quantization indices from the quantized data points. It is also possible to re-apply a coarser quantization to a biometric data sequence with a finer original quantization. Prior to the extraction of the quantization indices, any voids, empty or silent pieces may be removed from the biometric data sequence and/or a warm-up sequence of constant signal amplitude is inserted at the beginning of the biometric data sequence.

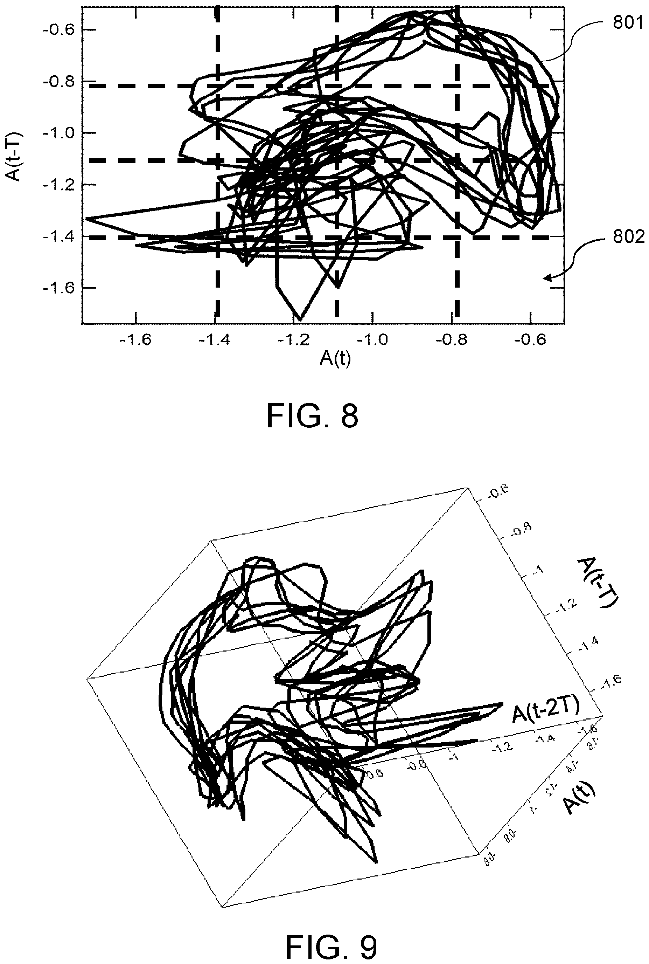

In step 404, one or multiple delayed versions of the quantization index sequence are generated, using one or multiple delay coordinates (e.g. time lags), in addition to the original quantization index sequence. For instance, a delayed quantization index sequence, delayed by 'T' time steps of the biometric data sequence is generated in step 404, which results in two quantization index sequences, k[t] and k[t-T], derived from the biometric data sequence. In embodiments of the invention, delayed quantization index sequences with respect to multiple delay coordinates may be generated, e.g. quantization index sequences k[t-T1], k[t-T2], ..., k[t-Tm] may be derived from a single biometric data sequence. The effect of step 404 is the creation of a delay embedding for the biometric data sequence, which is subsequently written into and processed by the volatile threshold switches. The delay embedding can be two dimensional, e.g. using the non-delayed quantization index sequence and one delayed version thereof (e.g. k[t] and k[t-T]), or of higher dimensionality, e.g. a delay embedding of m+1 dimensions using the non-delayed quantization index sequence and the m delayed quantization index sequences k[t-T1] through k[t-Tm]. The m time lags may be multiple integers of a fundamental time lag, i.e. T1 = i, T2 = 2 τ, ..., Tm = m τ. According to Taken's theorem, a smooth phase-space trajectory/attractor for the dynamic system underlying a dynamic system can be reconstructed from a finite number of observations through the delay embeddings. Hence, box-counting for the user-specific phase-space trajectory or attractor induced by the biometric data sequence can be efficiently implemented on one or multiple arrays of threshold switches onto which the reconstructed attractor in the embedding space is mapped. Indeed, the individual threshold switches have a short-memory effect that keeps track of the number of times the dynamic system has passed through a particular quantization box B of the delay embedding space, e.g. B = (k[t]; k[t-T]) in two dimensions, and small differences in attractor dynamics are exponentially amplified in the measured leakage currents of the threshold switches. By way of example, FIG. 8 shows the two-dimensional delay embedding obtained for the gait signal shown in FIG. 7, using the angular acceleration signal A(t) and the delayed version A(t-T), wherein the time delay coordinate 'T' may be T = 100 ms, as well as the reconstructed phase-space trajectory/attractor 801. As the signal is quantized before writing to the crossbar array of threshold switches, only passages of the attractor in one of the quantization boxes 802, e.g. defined by the pair of quantization indices B = (k[t]; k[t-T]), are accounted for in the crossbar array. The boundaries of the quantization boxes 802 may be optimized with respect to an application of interest, by choosing an equal density binning approach. The equal density binning approach ensures that each quantization box - the 'bin' - contains an equal averaged amount of data points, wherein the average is taken over many embedded trajectories belonging to the many different time series of a dataset, e.g., gait or voice time series related to many different subjects. FIG. 9 illustrates a three-dimensional delay embedding of the gait signal shown in FIG. 7, using the angular acceleration signal A(t), the first delayed version A(t-T) and the second delayed version A(t-2T), wherein the time delay coordinate 'T' may be T = 100 ms. The quantization boxes are not shown in FIG. 9.

Next, a single threshold switch of the array is selected in step 405 for each time step of the biometric data sequence. The selection is based on the original and delayed versions of the quantization index sequence. For instance, the current data point of the original quantization index sequence kr = k[t] is used as a row address and the current data point of the delayed quantization index sequence kc = k[t-T] is used as a column address. It is understood that threshold switch selection only starts after an initial waiting time that lasts for T-1 time steps.

During step 406, a write pulse is applied to the previously selected threshold switch. A write pulse has a voltage amplitude that exceeds the immediate threshold voltage of the switch. The write pulse of amplitude Vp may be written to the selected threshold switch of the array by temporarily raising the voltage level on the column line corresponding to the selected threshold switch to Vp/2 and at the same time lowering the voltage level on the row line corresponding to the selected threshold switch to -Vp/2. This creates a voltage difference of Vp across the selected threshold switch for the duration of the write pulse, but leaves the other threshold switches substantially unaffected, because the voltage difference is limited to Vp/2. Preferably Vp/2 is below the threshold voltages of the unselected switches. Nonetheless, unintended resistance switching in some of the non-selected threshold switches can be tolerated and enriches the processing capability of the array of threshold switches by way of mutual coupling.

After a predetermined number of time steps and associated write pulses, e.g. after each time step and corresponding write pulse, the leakage current through a subset or all of the threshold switches of the array is measured during a readout cycle in step 407. If the leakage currents for a subset of the plurality of threshold switches is detected, e.g. row-wise, a different subset is selected for readout of the leakage currents is measured during the following readout cycle, and so forth, until the leakage current measurement for all the subsets (e.g. rows) of threshold switches has been completed. The subsequent readout cycle then starts a fresh measurement of the leakage currents in threshold switches of the first subset. If the leakage currents in all the threshold switches are measured during each readout cycle, then a fresh measurement of the leakage currents starts with each readout cycle. During the readout cycle, individual threshold switches or groups of threshold switches are selected and a readout pulse is applied to the selected threshold switches, wherein the readout pulse has a lower voltage amplitude than write pulses. This ensures minimal disturbance of the internal states of the threshold switches during the readout cycle. For instance, a voltage amplitude of the readout pulses may be set below the holding voltage of the threshold switches, whereby the threshold switches are biased in the sub-threshold regime during readout of the leakage currents. Owing to their high resistance in the sub-threshold region, the threshold switches display small leakage currents, e.g. less than 0.1 nA, which minimizes energy consumption related to the readout process. Nonetheless, higher readout voltage pulse amplitudes and leakage currents may be justified, in some embodiments of the inventions, by the corresponding increase in the accuracy of the readout leakage currents.

Moreover, the measured leakage currents of each threshold switch are accumulated and the cumulative leakage current is calculated in step 407, e.g. either by summing all the measured leakage currents for each threshold switch after the final readout cycle, or by repeatedly updating the cumulative leakage current for each threshold switch after each measurement. The results of the accumulation operation, i.e. the cumulative leakage current values of the different threshold switches, are associated with different components of a query vector, and the query vector is stored.

In step 408, the query vector is compared to a plurality of biometry class vectors of a database. The biometry class vectors for a group of known users can be generated and stored in the database, or previously acquired biometry class vectors can be transferred into the data base, during optional step 409. Associated with each stored biometry class vector is user information such as name or logon credentials. The comparing step 408 may comprise calculating a similarity measure between the query vector and each of the stored biometry class vectors in the database.

Eventually, the query vector is matched with the most similar biometry class vector in the database in step 410, using the calculated similarity measure as a ranking criterion. The user information associated with the matched biometry class vector is retrieved and, still as part of step 410, output as the result of the user identification process. If none of the stored biometry class vectors can be matches, e.g. for an unknown or not yet registered source of biometric data, the method may output an unknown user.

Referring now to FIG. 5, the steps of a user registration process 500 are illustrated. New users, or an initial group of users, can be added in the registration process. First, steps 401 to 407 of the method 400 of FIG. 4 are carried out for any user to be registered. Next, the identity of the user to be registered is validated by an authority, security provider or by means of already existing authentication tokens (e.g. keycard, fingerprints, etc.) in step 501. More user information such as name, logon credentials, security question and/or password may be recorded in step 502 of the registration phase. This user information, as well as information regarding the source of biometric data and the acquisition circumstances, if any, is stored in the database, e.g. as metadata associated with each biometry class vector. Biometry class vectors with respect to different sources of biometric data sequences, e.g. voice or gait, and/or different acquisition circumstances, e.g. running/walking or background noise/flue, can be stored for each user during the registration process. Combining different biometric modalities, such as voice and gate, by saving biometry class vectors for the different modalities and carrying out a combined authentication in particular embodiments of the invention has the benefit of increasing the degree of security that the authentication system and method provides. After successful validation of the user identity, query vectors that have been generated for each new user in previous steps 401 to 407 are stored as biometry class vectors in the database during step 503. The stored biometry class vectors are readily available identification and/or authentication tokens in user identification or authentication methods in accordance with embodiments of the invention.

It is an advantage of embodiments of the invention that biometry class vectors and query vectors can be obtained in a single shot. If the biometric data sequence is replayed, a more accurate query vector or biometry class vector can be obtained by averaging. A time-consuming and energy consuming training phase as in conventional artificial neural networks, in which training data is repeated multiple times over many epochs, is not required. Moreover, raw data as acquired by biometric sensors may be used as system input without the need of any additional preprocessing in the frequency domain, e.g. no fast Fourier transforms need to be implemented. In some embodiments of the invention, the system comprises a preprocessing unit that prepares time series input data for the further processing by the plurality of threshold switches. By way of example, the preprocessing unit is configured to perform formatting of the input sequences, which may include the sub-steps of adjusting the magnitude range of the input sequences to match a predefined input range of the system, and/or detecting and removing silent periods in the input sequences.

FIG. 6 explains the steps of a user authentication method 600 in accordance with embodiments of the invention. Steps 401 to 407 of the method 400 of FIG. 4 are carried out initially, which results in a query vector for the user to be authenticated. Next, information identifying the user requesting authentication, e.g. the user logon or user name, or password, is used to filter the relevant biometry class vectors of the database whose associated metadata matches the provided user identification information in step 601. Moreover, the query vector is compared to the filtered set of biometry class vectors and a confidence or trust score is established in respect of each one of them, e.g. based on a similarity measure between the query vector and the stored biometry class vectors. If the comparison in step 601 results in a confidence score that is larger or equal to a predetermined threshold, the identity of the user is authenticated in step 603 and the system may issue a message that permission rights to a protected resource are granted. Otherwise, the system may issue a message that permission rights to a protected resource are denied. As an additional security measure, a user password may be compared to the corresponding password information that is stored in the metadata in step 602, e.g. the output of a hash function of the provided user password is compared with the hash value for the password in the stored metadata.

Authentication methods in accordance with embodiments of the invention have been benchmarked for gait (six waist sensors) and voice signals as sources of biometric data, respectively lasting for 4.6 sec and 7-10 sec. Simulations of a linear array of volatile threshold switches resulted in low equal error rates (false acceptance rate equal to false rejection rate) on the benchmark tasks, e.g., 0.7 % and 2 % for the gait data and voice data respectively.

Embodiments of the invention more generally provide systems and methods for the processing of temporal data such as data streams or time series. Data streams may stem from sensors, communication networks, video and audio feeds, etc. Time series or temporal patterns are ubiquitous in dynamical systems, including but not limited to weather data, crowd behavior, stock market behavior, robotics, nonlinear physical, biological or chemical systems such as nonlinear optical or mechanical oscillators, circadian clock, population dynamics, reaction-diffusion systems, and nonlinear chemical reactions (clock reactions, catalytic oscillator, etc.). Therefore, embodiments of the invention include but are not limited to the use of the temporal data processing systems in biometric identification and/or authentication methods. They can also be used in pattern prediction or classification methods for complex dynamical systems. In such pattern prediction or classification methods, the database of the temporal processing system stores class vectors that are reminiscent of the different patterns encountered in the dynamical system of interest, e.g. locomotion patterns for robotics, whereas the biometric sensors can be replaced by sensors that gather information about the internal state and/or environment of the dynamical system, e.g. motion camera, time-of-flight sensor, Doppler sensor, etc. Pattern changes can then be predicted or identified by the query processor based on the matching score between query vector and stored pattern class vectors.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A biometric authentication and identification system (100) comprising:
a quantization unit (102) configured to assign a quantization index k to each datapoint of a user-specific biometric time series,
a plurality of volatile threshold switches (108a), each threshold switch transitioning from a high resistance state to a low resistance state while subjected to a voltage pulse exceeding a threshold voltage, and cycling history-dependent shifts in the threshold voltage of each threshold switch being relaxed in the high resistance state,
an address decoder (105) for selecting, at each time step t of the user-specific biometric time series, a single threshold switch of the plurality of threshold switches through an index combination comprising at least the quantization index k[t] corresponding to the time step t and the quantization index k[t-T] corresponding to an earlier time step t-T, wherein T designates a predetermined time lag,
a pulse generator (115) configured for applying voltage pulses exceeding the threshold voltage to threshold switches selected by the address decoder,
a readout unit (109) for measuring a threshold voltage-dependent leakage current of each threshold switch in the high resistance state and accumulating the leakage currents as components of a query vector,
a database (111) storing biometry class vectors as authentication and identification tokens for a predefined user group and configured for matching the query vector with one of the biometry class vectors.

2. The system according to claim 1, wherein the plurality of threshold switches are arranged in a linear array,
or wherein the plurality of threshold switches are arranged in crossbar array (106) and located at respective crossing points (107) of a plurality of row select lines and a plurality of column select lines of the crossbar array.

3. The system according to any one of claims 1 or 2, wherein the plurality of threshold switches are two-terminal ovonic threshold switches (200).

4. The system according to any one of claims 1 or 2, wherein the plurality of threshold switches are three-terminal field-effect transistors, a gate dielectric of each field-effect transistor exhibiting bias temperature instability.

5. The system according to any one of the preceding claims, wherein the pulse generator is further configured for applying sub-threshold voltage pulses to the threshold switches to induce the threshold voltage-dependent leakage currents to be measured by the readout unit.

6. The system according to any one of the preceding claims, wherein the readout unit is configured to:
repeatedly measure the leakage current of each threshold switch at predetermined time step intervals,
determine a cumulative leakage current for each threshold switch, and
output the cumulative leakage currents of the plurality of threshold switches as components of said query vector after the last time step of the biometric time series.

7. The system according to any one of the preceding claims, further comprising at least one biometric sensor (101a, 101b) for generating the biometric time series in response to a user input.

8. The system according to any one of the preceding claims, wherein the database is further configured for storing the query vector of a user to be authenticated as biometry class vector in a registration mode of the system.

9. The system according to any one of the preceding claims, wherein the database stores at least one biometry class vector as authentication token for a preregistered user and is further configured to:
assign a trust score to said matching of the query vector with the at least one biometry class vector, and
authenticate the identity of the user if the trust score is larger than or equal to a predefined threshold.

10. The system according to any one of the claims 1 to 8, wherein the database stores biometry class vectors for multiple preregistered users and is further configured to:
store user identification information as metadata associated with the biometry class vector,
assign a similarity score to said matching of the query vector with each one of the biometry class vectors,
retrieve the identity of the preregistered user attaining the highest similarity score during said matching of the query vector.

11. A biometric identification method comprising the steps of:
(i) quantizing a user-specific biometric time series by assigning a quantization index k to each datapoint of the user-specific biometric time series,
(ii) selecting, at each time step t of the biometric time series, a single threshold switch of a plurality of threshold switches through an index combination comprising at least the quantization index k[t] corresponding to the time step t and the quantization index k[t-T] corresponding to the earlier time step t-T, wherein T designates a predetermined time lag,
(iii) applying voltage pulses exceeding a threshold voltage to selected threshold switches of the plurality of threshold switches, each threshold switch transitioning from a high resistance state to a low resistance state while subjected to said voltage pulse, and cycling history-dependent shifts in the threshold voltage of each threshold switch being relaxed in the high resistance state,
(iv) measuring a threshold voltage-dependent leakage current of each threshold switch in the high resistance state and accumulating the leakage currents into corresponding components of a query vector,
(v) providing a database storing biometry class vectors as identification tokens for a predefined user group,
(vi) matching the query vector with one of the biometry class vector stored on the database and identifying the user based on the matched biometry class vector.

12. The method of claim 11, further comprising the step of preregistering one or multiple users to be identified, including:
providing at least one biometric registration sequence with respect to each user to be identified,
carrying out steps (i) to (iv) of claim 11, using the at least one biometric registration sequence of each user as the user-specific biometric time series, and
storing the query vector obtained with respect to each user to be identified as biometry class vector in the database,
optionally, using equal density binning when quantizing said at least one biometric registration sequence

13. The method of any one of claims 11 or 12, wherein step (iv) further comprises:
measuring the leakage current of each threshold switch repeatedly at predetermined time step intervals,
determining a cumulative leakage current for each threshold switch, and
using the cumulative leakage currents of plurality of threshold switches as components of said query vector after the last time step of the biometric time series.

14. The method of any one of claims 11 to 13, further comprising the step of:
generating the biometric time series in response to user input to a biometric sensor, and/or
assigning a trust score when matching the query vector with the at least one biometry class vector, and authenticating the identity of the user if the trust score is larger than or equal to a predefined threshold.

15. The method of any one of claims 11 to 14, wherein the plurality of threshold switches are arranged in an array and step (ii) further comprises:
selecting a row of threshold switches of the array corresponding to the quantization index k[t], and
selecting a column of threshold switches of the array corresponding to the quantization index k[t-T].
